# EUROPÄISCHE PATENTSCHRIFT

(11) **EP 1 346 211 B1**
(45) Veröffentlichungstag und Bekanntmachung des Hinweises auf die Patenterteilung: **01.08.2007**
(21) Anmeldenummer: 01985379.5
(22) Anmeldetag: 07.12.2001
(51) Int. Cl.: G01N 27/447, B01D 57/02

(54) **TRÄGERFREIES ELEKTROPHORESEVERFAHREN UND ELEKTROPHORESEVORRICHTUNG ZUR DURCHFÜHRUNG DIESES VERFAHRENS**
FREE FLOW ELECTROPHORESIS METHOD AND ELECTROPHORESIS DEVICE FOR CARRYING OUT THIS METHOD
PROCEDE D'ELECTROPHORESE LIBRE ET DISPOSITIF D'ELECTROPHORESE POUR METTRE EN OEUVRE LEDIT PROCEDE

(30) Priorität: 18.12.2000 DE 10063097
(43) Veröffentlichungstag der Anmeldung: 24.09.2003
(73) Patentinhaber: Becton, Dickinson & Company, Franklin Lakes, NJ 07417-1880 (US)
(72) Erfinder: Gerhard Weber, 85551 Kirchheim-Heimstetten (DE)
(74) Vertreter: von Kreisler Selting Werner
(86) Internationale Anmeldenummer: PCT/EP2001/014408
(87) Internationale Veröffentlichungsnummer: WO 2002/050524

(56) Entgegenhaltungen:
- EP-A- 0 203 713
- EP-A- 0 497 077
- DE-C- 4 232 781
- WEBER G ET AL: "RECENT DEVELOPMENTS IN PREPARATIVE FREE FLOW ISOELECTRIC FOCUSING" ELECTROPHORESIS, WEINHEIM, DE, Bd. 19, Nr. 10, Juli 1998 (1998-07), Seiten 1649-1653, XP001057209 ISSN: 0173-0835
- TODD P ET AL: "MULTISTAGE ELECTROPHORESIS SYSTEM FOR THE SEPARATION OF CELLS, PARTICLES AND SOLUTES" ELECTROPHORESIS, WEINHEIM, DE, Bd. 21, 2000, Seiten 318-324, XP002937157 ISSN: 0173-0835

## Beschreibung

Die Erfindung betrifft ein trägerfreies ElektrophoreseVerfahren zum Trennen von Probensubstanzen in ihre Analyten sowie eine Elektrophoresevorrichtung zur Durchführung dieses Verfahrens.

Bekannte trägerfreie Elektrophoreseverfahren FFE arbeiten üblicherweise mit Elektrophoresevorrichtungen, deren Trennkammer nur zwei getrennte Elektrodenräume und nur einen Trennraum zwischen diesen Elektrodenräumen aufweist.

Wenn jedoch die FFE im Bereich der Proteomics-Forschung eingesetzt werden soll, muß es möglich sein, eine Vielzahl von unterschiedlichen Probesubstanzen in kurzer zeit, mit größtmöglicher Trennleistung und bei größtmöglichem Durchsatz an Probenmenge zu trennen.

Wie bei den meisten Trennverfahren ist jedoch auch bei der FFE eine gleichzeitige Optimierung der Elektrophoresevorrichtung hinsichtlich der Trennleistung und des Probendurchsatzes nur in sehr engen Grenzen möglich, da eine Erhöhung der Menge der Probesubstanz eine Minderung der Trennleistung zur Folge hat.

Die Optimierung der Trennleistung erfordert weiterhin einen Trennraum mit einem möglichst engen und präzisen Trennkammerspalt sowie besondere Randbedingungen der Trennung wie z.B. eine relativ geringe lineare Flußgeschwindigkeit, eine möglichst lange Trennzeit und möglichst viele Fraktionierstellen über die gesamte Breite des Trennraumes bzw. über den Bereich des Trennraumes, in dem die interessierende Probesubstanz fraktioniert werden soll. Da aber die lineare Flußgeschwindigkeit nicht beliebig reduziert werden kann, erfordert eine Verlängerung der Trennzeit eine entsprechende Vergrößerung der Länge der Elektroden. Das, wiederum bedeutet eine gleichzeitige Erhöhung der Außendimensionen der Trennkammer. was es schwierig bis unmöglich macht, den Trennkammerspalt mit der geforderten Präzision zu fertigen.

Aus der DE 2215761 A1 ist eine Elektrophoresevorrichtung bekannt, die nach dem Elektrofiltrationsverfahren arbeitet. Die bekannte Elektrophoresevorrichtung weist eine Trennkammer, auf beiden Seiten der Trennkammer angeordnete Elektroden, Fraktionierstellen und Probeaufgabestellen auf, wobei in der Trennkammer mehrere Membrane vorgesehen sind, die die Trennkammer in eine Vielzahl von miteinander in Verbindung stehenden Trennräume unterteilt. Die Membranen dienen als Filter und sind für die jeweils abzutrennenden Spezies permeabel.

Aus der EP 0203713 A2 ist es weiterhin bekannt, bei einer derartigen Elektrophoresevorrichtung für jeden der von den Membranen begrenzten Trennräume ein eigenes Elektrodenpaar vorzusehen.

EP-A-0 497 077 offenbart eine Vorrichtung und ein Verfahren zur Freifließ-Elektrophorese, wobei die Durchlaufzeit sehr kurz sein soll. Die Vorrichtung dient zur Vorbereitung oder Gewinnung von Proben insbesondere für Analysezwecke aus einer Flüssigkeit, wobei nur sehr wenig Flüssigkeiten und Substrate zur Verfügung stehen oder verbraucht werden sollen und die Probeaufbereitung sehr schnell durchgeführt werden soll. Die Vorrichtung hat dazu ein im wesentlichen flaches, in einen plattenförmigen Körper eingearbeitetes oder eingeäztes Fließbett, welches in Fließrichtung an einander entgegengesetzten Enden Einlässe und Auslässe hat und auf der Bearbeitungsseite des plattenförmigen Körpers durch eine weitere Platte überdeckt und abgeschlossen ist, so dass das Fließbett, welches einen etwa nutenförmigen flachen Querschnitt hat, allseitig abgeschlossen ist. Parallel zu dem Fließbett verlaufen jedoch ebenfalls in den plattenförmigen Körper eingearbeitete oder eingeäzte Elektrodenräume, die über Elektroden mit einer Stromquelle verbunden sind, um innerhalb des Fließbettes ein quer zur Fließrichtung gerichtetes elektrisches Feld zu erzeugen. Die Elektrodenräume sind mit dem Fließbett über quer zur Fließrichtung verlaufende sehr feine Kanäle verbunden, die zwar eine Spannungsübertragung aber praktisch keinen Massetransport ermöglichen, also ähnlich wie Membrane wirken,

Die der Erfindung zugrunde liegende Aufgabe besteht daher darin, ein trägerfreies Elektrophoreseverfahren und eine Elektrophoresevorrichtung zur Durchführung dieses Verfahrens zu schaffen, die eine höhere Trennleistung, eine kürzere Trennzeit und einen größeren Durchsatz erlauben.

Diese Aufgabe wird gemäß der Erfindung durch das trägerfreie Elektrophoreseverfahren gelöst, das im Anspruch 1 angegeben ist.
Eine besondere bevorzugte Weiterbildung und Ausgestaltung des erfindungsgemäßen Verfahrens ist Gegenstand des Anspruchs 2.

Die erfinderungsgemäße Elektrophoresevorrichtung ist Gegenstand des Anspruchs 3.

Besonders bevorzugte Weiterbildungen und Ausgestaltungen der erfindungsgemäßen Elektrophoresevorrichtung sind Gegenstand der Ansprüche 4 bis 9.

Gemäß der Erfindung wird somit statt eines einstufigen Trennverfahrens bei gleichzeitiger Optimierung der Trennleistung und des Probendurchsatzes ein zweistufiges Trennverfahren angewandt, das in einer ersten Stufe eine sehr schnelle Vortrennung oder Grobfraktionierung mit dem Ziel des größtmöglichen Probendurchsatzes und nachfolgend in wenigstens einer zweiten Stufe eine gezielte Feinfraktionierung des grobfraktionierten Teilstromes der Probensubstanz durchführt.

Eine Erhöhung des Probendurchsatzes in der ersten Stufe der Grobfraktionierung kann insbesondere dadurch erzielt werden, daß der Trennvorgang mittels der FFE bei erhöhter linearer Flußgeschwindigkeit und gleichzeitig verkürzter Wanderungsstrecke für die zu trennenden Analyten durchgeführt wird. Dabei kann die Zahl der Fraktionierstellen für die Grobfraktionierung deutlich reduziert werden und kann für den Fall, daß nur an einer Fraktion Interesse besteht, eine einzige Fraktionierstelle vorgesehen werden. Eine weitere Erhöhung des Probendurchsatzes ist dann möglich, wenn dieses zweistufige Verfahren in Form eines parallelen simultanen Mehrfachverfahrens durchgeführt wird.

Im Folgenden.werden anhand der zugehörigen Zeichnungen besonders bevorzugte Ausführungsbeispiele der Erfindung näher beschrieben. Es zeigen
- Figur 1, Figur 2 und Figur 3 schematische Ansichten der Ausbildung der Trennkammer bei drei Ausführungsbeispielen der Erfindung,
- Figur 4 und Figur 5 schematische Schnittansichten der Trennkammer bei einem Ausführungsbeispiel der Erfindung,
- Figur 6 und Figur 7 den Aufbau des Trennkammervorderteils und des Trennkammerrückteils im Bereich der Medienzuführungen und Fraktionierung jeweils,
- Figur 8, Figur 9 und Figur 10 die relative räumliche Anordnung der verschiedenen Fraktionierstellen und der Zuleitungen der Querströmungen und
- Figur 11, 12 und 13 die Beeinflussung des Strömungsprofils mittels der Querströmung.

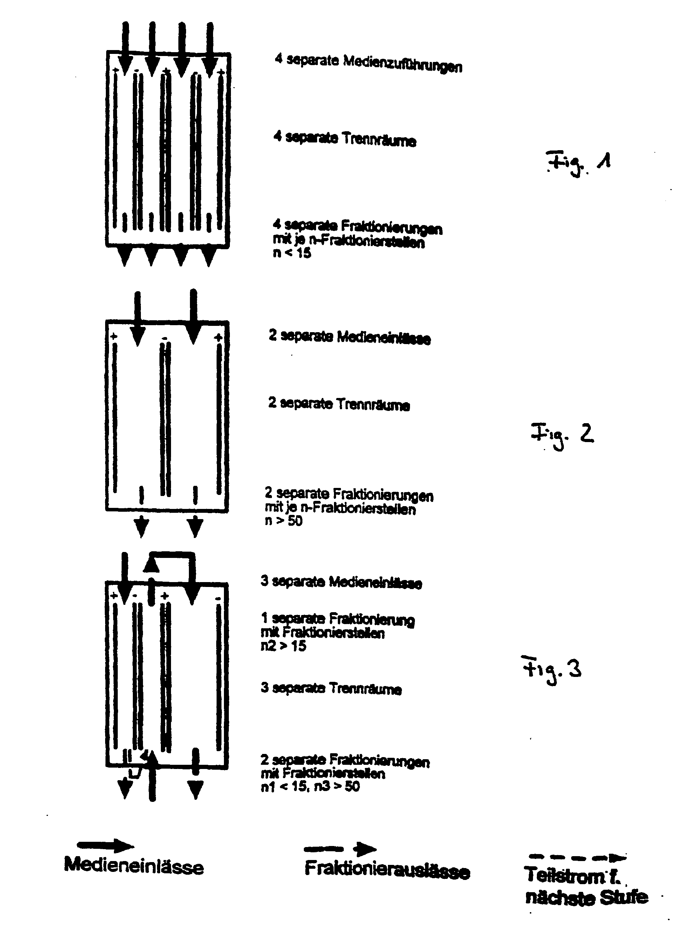

In den Figuren 1, 2 und 3 sind schematisch drei Beispiele der Trennkammer bei verschiedenen Ausführungsbeispielen der erfindungsgemäßen Elektrophoresevorrichtung dargestellt. Damit die Trennkammer eine Außenabmessung hat, die eine Fertigung des Trennkammerspaltes mit der notwendigen Präzision erlaubt, sind in der Trennkammer mehrere separate Trennräume vorgesehen. Gemäß Figur 1 sind vier separate Trennräume mit vier separaten Medienzuführungen und vier separaten Fraktionierungen mit jeweils n Fraktionierstellen vorgesehen, wobei n kleiner 15 ist. Figur 2 zeigt eine Trennkammer mit zwei separaten Trennräumen und zwei separaten Medieneinlässen bei zwei separaten Fraktionierungen mit jeweils n Fraktionierstellen, wobei n größer 50 ist. Figur 3 zeigt schließlich eine Trennkammer mit drei separaten Trennräumen, drei separaten Medieneinlässen, zwei separaten Fraktionierungen mit n1 und n3 Fraktionierstellen, wobei n1 kleiner 15 und n3 größer 50 ist, und einer weiteren separaten Fraktionierung mit n2 Fraktionierstellen, wobei n2 größer 15 ist.

Die in den Figuren 1 bis 3 dargestellten Trennräume haben je nach Ausführungsform separate Elektroden oder gemeinsame Elektroden mit den benachbarten Trennräumen, wenn identische Medien in den jeweiligen Elektrodenräumen verwendet werden können.

Mit den in den Figuren 1 bis 3 dargestellten Trennkammern, erfolgt eine trägerfreie Elektrophorese FFE zum Trennen von Probesubstanzen in ihre Analyten in Form eines wenigstens zweistufigen Verfahrens, wobei in der ersten Stufe eine Grobfraktionierung der Probensubstanz und in wenigstens einer zweiten Stufe eine Feinfraktionierung der grobfraktionierten Probesubstanz erfolgt.

Dieses Verfahren kann im parallelen Simultanbetrieb oder im seriellen Betrieb durchgeführt werden, wobei die in den Figuren 1 und 2 dargestellten Trennräume im parallelen Simultanbetrieb als Trennraum für die Grobfraktionierung (Figur 1) und als Trennraum für die Feinfraktionierung (Figur. 2) verwandt werden können. Figur 3 zeigt den Trennraum für den seriellen Betrieb in Form eines dreistufigen Verfahrens, bei dem die Grobfraktionierung in Serie mit einer zweistufigen Feinfraktionierung kombiniert ist.

Bei der parallelen Arbeitsweise kann entweder eine einzelne Probesubstanz gleichzeitig mehreren Trennräumen zudosiert werden oder es können verschiedene Probesubstanzen in die separaten Trennräume appliziert werden. Die Trennung der Probesubstanzen im parallelen Simultanverfahren ermöglicht eine Erhöhung des Durchsatzes der Probesubstanzen oder eine Erhöhung der Anzahl der Probesubstanzen.

Durch eine Verkürzung der Breite der separaten Trennräume lassen sich die Wanderungsstrecken der Analyten verkürzen undes können die Trennprozesse mit höherer Flußgeschwindigkeit der Trennmedien und der Probesubstanzen durchgeführt werden. Mit zunehmender Zahl der Trennräume wird die Breite der Trennräume wesentlich kleiner, was allerdings zur Folge hat, daß zwar nur eine Grobfraktionierung aber mit wesentlich höherem Probendurchsatz möglich ist.

Wenn die Trennräume mit völlig getrennten Elektrodenräumen in Serie geschaltet sind, werden die Fraktionen der Trennung aus einem Trennraum in den nachfolgenden Trennräumen unter identischen Trennbedingungen weiter getrennt und as läßt sich dadurch eine höhere Trennleistung erzielen. In den in Serie geschalteten Trennräumen können die Trennungen aber auch unter verschiedenen Bedingungen hinsichtlich der verwendeten Trenntechniken, der Trennmedien und/oder der allgemeinen eletrophoretischen Trennparameter durchgeführt werden.

Die Trennräume und die technischen Ausführungen der einzelnen Trennräume lassen sich mittels des oben beschriebenen Aufbaus fast beliebig kombinieren, wie es im Folgender beschrieben wird.

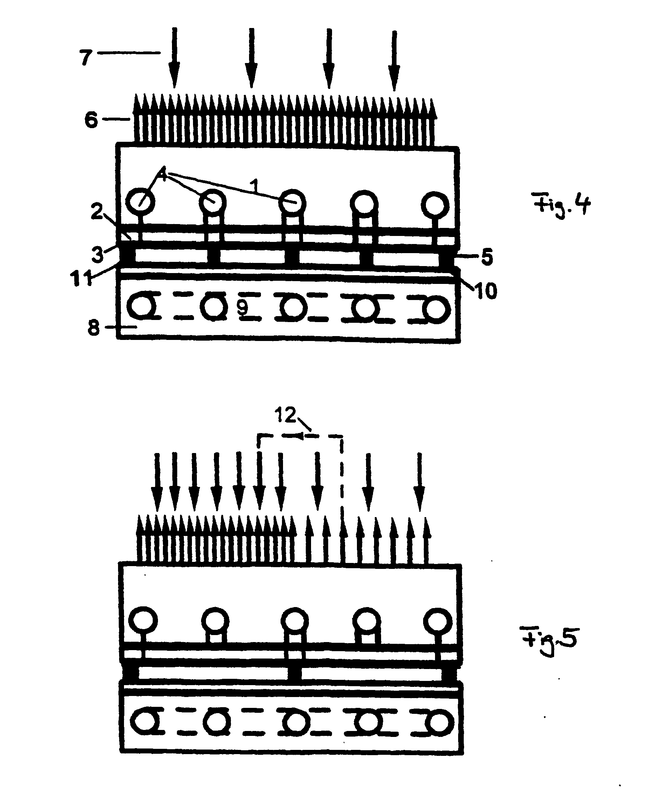

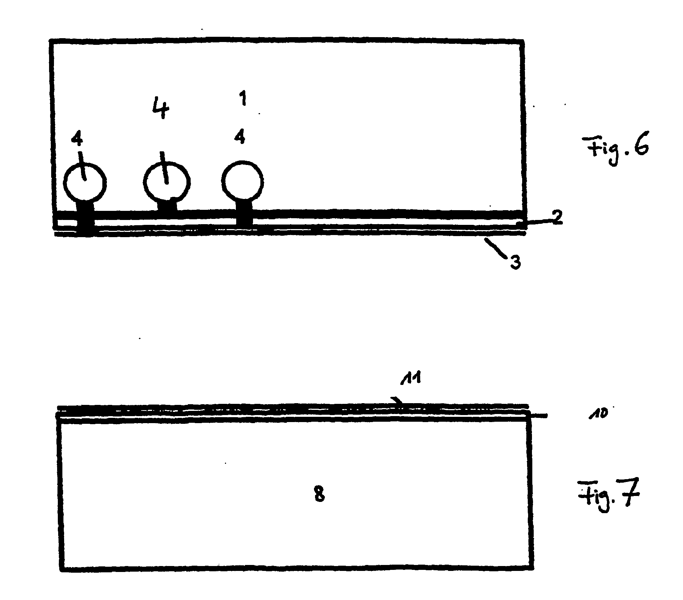

Wie es in den Figuren 4 und 5 dargestellt ist, besteht eine Trennkammer üblicherweise aus zwei Baugruppen, nämlich dem Trennkammervorderteil und dem Trennkammerrückteil. Bei der erfindungsgemäßen Ausbildung bestehen die einzelnen Baugruppen jedoch aus mehreren separaten Bauelementen, die schematisch in Figur 4 und Figur 5 dargestellt sind.

Das heißt im Einzelnen, daß in der in Figur 4 dargestellten Weise ein Trennkammervorderteil aus einem Kunststoffblock 1 mit einer Hartplastikfolie 2 und eine Weichplastikfolie 3 sowie ein Trennkammerrückteil aus einem Metallblock 8 mit einer Glasfolie 10 und einer Weichplastikfolie 11 über Abstandhalter 5 aneinander angeordnet sind. Im Kunststoffblock 1 sind mehrere, bei dem dargestellten Ausführungsbeispiel vier, Elektrodenräume 4 vorgesehen. Im Metallblock 8 befinden sich Kühlrohre 9. Es sind ,weiterhin Medieneinlasse 7 und eine Vielzahl von Fraktionierungsstellen 6 vorgesehen. Figur 5 zeigt die Übertragung 12 der vorfraktionzerten Probe.

Die Baugruppe des Trennkammervorderteils in Figur 4 besteht somit aus einem Basisbaustein, nämlich einem massiven Plexiglasblock 1, in dem bis zu acht Elektrodenräume 4 und die öffnungen für spezifische Methodenmodule der Medienzuführungen und der Fraktionierungen untergebracht sind. Auf diesen Basisbaustein 1 ist eine dünne Folie 2 aus einem harten Kunststoffmaterial aufgebracht, wobei diese im Bereich der für die jeweiligen Anwendung benötigten Elektrodenräume des Kunststoffblockes 1 öffnungen für den stromtransport aufweist und die benötigten Elektrodenräume des Kunststoffblockes 1 nicht verschließt. Das gleiche gilt für die Ausführung der Hartplastikfolie 2 im Bereich der MedienzufNxrmgen 7 und der Fraktionierungen 6. Die dem Trennraum zugewandte Fläche der Hartplastikfolie 2 kann entweder direkt chemisch modifiziert sein oder in der dargestellten Weise durch eine Kunststoffolie 3 abgedeckt sein, deren Oberfläche, die den Trennraum direkt begrenzt, soweit chemisch modifiziert ist, daß die Effekte der Elektroosmose und der Sorption der Probenspezies minimiert sind.

Durch die beschriebene Kombination des Basisbausteines, nämlich des Kunststoffblockes 1, mit den beiden Kunststoffolien 2, 3, die anwendungsspezifisch modifiziert sind, können alle beschriebenen Anforderungen hinsichtlich der Anzahl der notwendigen Trennstufen, der Geometrie des Trennraumes und der speziellen elektrophoretischen Randbedingungen in der jeweiligen Stufe des Trennprozesses erfüllt werden.

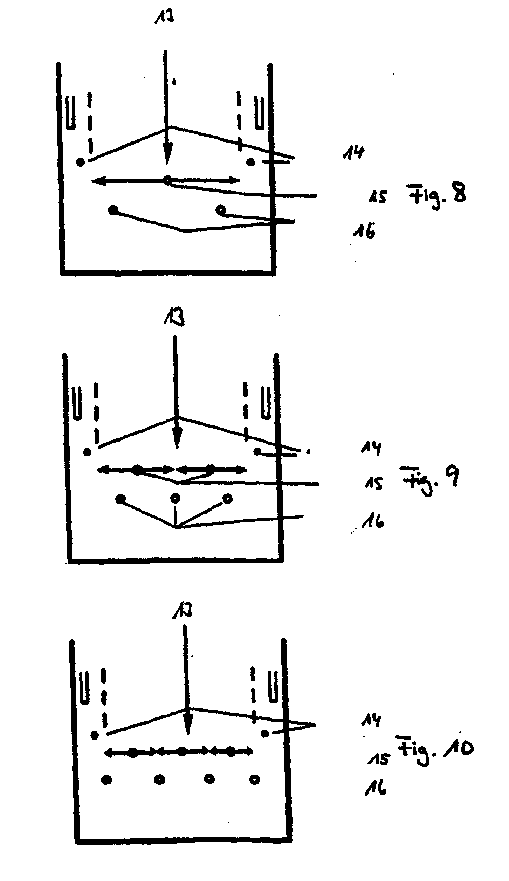

In den Figuren 6 und 7 ist der Aufbau des Trennkammervorderteils und Trennkammerrückteils jeweils im Einzelnen dargestellt. Wie es in Figur 7 dargestellt ist, besteht der Trennkammerrückteil aus mehreren Schichten, nämlich dem Metallblock 8, der Glasfolie 10 und der Weichplastikfolie 11. Diese Schichten können in verschiedener Weise kombiniert werden, um die Trennvorrichtung für die jeweilige Anwendung zu optimieren.

Der Basisbaustein des Trennkammerrückteils ist somit ein massiver Metallblock 8, der in Verbindung mit einer externen Kühlung eine effektive Abführung der während der elektrophoretischen Trennung entwickelten Wärme ermöglicht. Die dem Trennraum zugewandte Oberfläche des Metallblockes 8 ist durch die elektrisch isolierende dünne Folie 10 aus Glas oder eine Keramikfolie abgedeckt, wobei diese elektrisch isolierte Folie durch die Kunststoffolie 11 abgedeckt ist, deren Oberfläche, die den Trennraum direkt begrenzt, chemisch so modifiziert ist, daß eine Optimierung des Trennvorganges erzielt ist. In der Regel können die dem Trennraum zugewandten Kunststoffolien, das heißt die Folien 3 und 11 hinsichtlich ihres Materials und der Art der chemischen Modifizierung identisch oder ähnlich sein, sie können bei bestimmten Verfahrenskombinationen aber auch unterschiedlich sein.

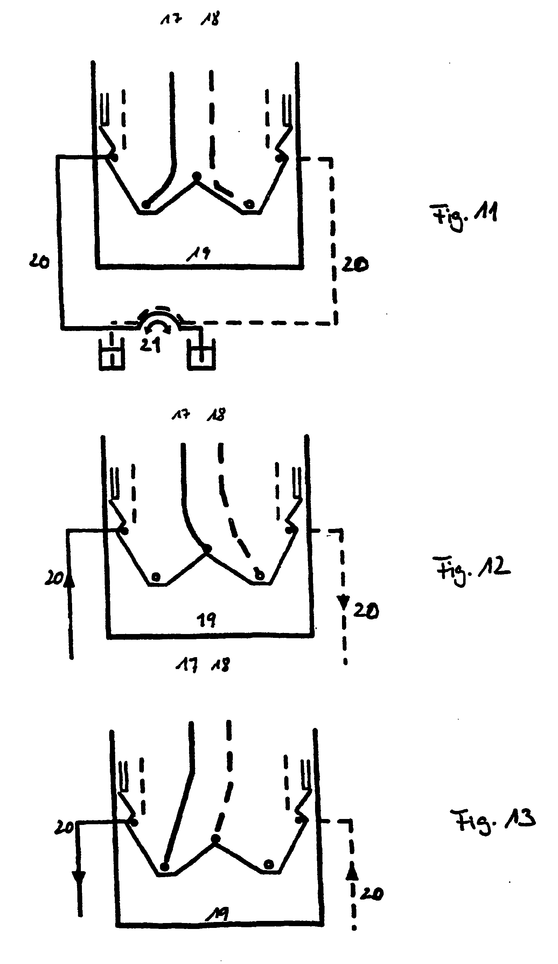

In den Figuren 8, 9 und 10 sind verschiedene Fraktioniermodule dargestellte, die bei dem erfindungsgemäßen Verfahren verwendet werden können. Der Fraktionierungsmodul in Figur 8 enthält in der Standardausführung drei Auslässe für die Fraktionierung, wobei bei besonderen Anwendungen fünf oder sieben Fraktionsauslässe vorgesehen sind, wie es in Figur 9 und Figur 10 jeweils dargestellt ist. Dabei ist die Flußrichtung des Trennmediums durch einen Pfeil 13 wiedergegeben und sind die Zuführungsstellen 14 für die Querströmung, die n Fraktionierstellen 15 für die Probensubstanz, und n+1 Auslässe 16 für das restliche Medium dargestellt.

Im Betrieb werden zwei separate Förderkanäle mit identischer Förderrate einer Dosierpumpe mit dem Trennraum jeweils im Bereich der elektrodennahen Fraktionierungsauslässe verbunden, wobei je nach Drehrichtung der Förderpumpe über eine Verbindung zu dem elektrodennahen Trennraum ein Medium zugegeben wird und gleichzeitig über eine zweite Verbindung ein Medium aus dem Trennraum mit derselben Volumenrate abgeführt wird. Durch die gleichzeitige Zugabe und Abführung des Mediums im elektrodennahen Trennraum wird das Strömungsprofil im Bereich der Fraktionierstelle der Probe verändert, wie es in den Figuren 11, 12 und 13 dargestellt ist.

Figur 11 zeigt zwei Analyten 17, 18, eine Pumpe 21 für die Querströmung, die Zuleitung 20 für die Querströmung und die Maske 19 für das Strömungsprofil. In Figur 11 ist ein Strömungsprofil ohne Querströmung dargestellt, Figur 12 zeigt das Profil bei angeschalteter Querströmung und Figur 13 zeigt das Strömungsprofil bei angeschalteter Querströmung aber mit umgekehrter Drehrichtung der Pumpe 21.

Im Folgendem wird ein präparativer Langzeitversuch, das heißt der Betrieb des Fraktionsmoduls bei zwei typischen alternativen Anwendungen, beschrieben;

Bei der präparativen Isolierung einer beliebigen getrennten Substanz wird die Förderrate der zweikanaligen Pumpe so gewählt, daß die zu isolierende Substanz über einen der dafür vorgesehenen Probenauslässe gesammelt werden kann. Die Förderrate der Zweikanalpumpe bleibt während der Dauer der präpara-, tiven Isolierung unverändert- Kann der im Probenfraktionierschlauch abfließende Analyt nur mit geringer Zeitverzögerung quantitativ detektiert werden, kann das Signal der Detektion für die Steuerung des Trennverfahrens dahingehend genutzt werden, daß der Analyt mit bester Ausbeute und Reinheit isoliert werden kann.

Wird während der elektrophoretischen Trennung die Förderrate der Pumpe jedoch kontinuierlich verändert, werden nacheinander getrennte Substanzen über die Probenfraktionierstelle gesammelt. Durch die Änderung der Förderrate und durch die Änderung der Drehrichtung der Zweikanalpumpe können alle getrennten Spezies nacheinander über die Fraktionierstelle eluiert werden und nachfolgend einem Detektionssystem und einem Fraktionssammler mit zeitgesteuertem oder peakgesteuertem Wechsel der Sammelgefäße zugeführt werden.

Wenn eine örtliche Verschiebung der Probenbande um mehr als 20 mm in Richtung der Probenfraktionierstelle erzielt werden muß, empfiehlt sich eine Erhöhung der Anzahl der Probenfraktionierauslässe, wobei diese Anzahl bei höheren Werten der Breite des Trennraumes beliebig erhöht werden kann, um eine optimale Qualität der Elution der Proben zu ermöglichen.

## Patentansprüche

1. Trägerfreies Elektrophoreseverfahren zum Trennen einer Probensubstanz in ihre Analyten umfassend in einer ersten Stufe eine Grobfraktionierung der Probensubstanz und in wenigstens einer zweiten Stufe eine Feinfraktionierung der grobfraktionierten Probensubstanz **dadurch gekennzeichnet, dass**
(a) in der ersten Stufe eine kleinere Anzahl von Fraktionierstellen als in der zweiten Stufe verwandt wird.

2. Verfahren nach Anspruch 1, **dadurch gekennzeichnet, daß** in der ersten Stufe mit einer hohen linearen Flußgeschwindigkeit und einer kurzer Wanderungsstrecke der zu trennenden Analyten gearbeitet wird.

3. Elektrophoresevorrichtung zur Durchführung des Verfahrens nach Anspruch 1 oder 2 mit einer Trennkammer, Elektroden, Fraktionierungen und Probeaufgaben, wobei die Trennkammer in eine Vielzahl separater Trennräume mit jeweils separaten Elektroden und separaten Fraktionierauslässen aufgeteilt Ist, **dadurch gekennzeichnet, dass** die Trennräume separate Probenaufgaben aufweisen.

4. Vorrichtung nach Anspruch 3, **dadurch gekennzeichnet, daß** für benachbarte Trennräume gemeinsame Elektroden vorgesehen sind.

5. Vorrichtung nach Anspruch 3 oder 4, **dadurch gekennzeichnet, dass** die separaten Trennräume verschiedene Anzahlen von Fraktionierstellen haben.

6. Vorrichtung nach einem der vorhergehenden Ansprüche, **dadurch gekennzeichnet, daß** zwei separate Förderkanäle einer Dosierpumpe mit dem Trennraum im Bereich der elektrodennahen Fraktionierauslässe verbunden sind, um Medium zuzugeben und im selben Volumen abzuführen.

7. Vorrichtung nach einem der vorhergehenden Ansprüche, **dadurch gekennzeichnet, daß** die Trennkammer aus einem Vorderteil und einem Rückteil aufgebaut ist, die aus jeweils mehreren separaten Kammerbauelementen bestehen.

8. Vorrichtung nach Anspruch 7, **dadurch gekennzeichnet, daß** das Rückteil aus einem massiven Metallblock besteht.

9. Vorrichtung nach Anspruch 8, **dadurch gekennzeichnet, daß** im Metallblock Kühlrohre vorgesehen sind.

## Claims

1. A carrierless electrophoresis method for separating a sample substance into its analytes, comprising the coarse fractionation of the sample substance in a first stage and the fine fractionation of the coarsely fractioned sample substance in at least one second stage, **characterized in that**:
(a) in the first stage, a smaller number of fractionation sites is used than in the second stage.

2. The method according to claim 1, **characterized in that**, in the first stage, a high linear flow rate and a short migrating path of the analytes to be separated are used.

3. An electrophoresis device for carrying out the method according to claim 1 or 2, comprising a separation chamber, electrodes, fractionations and sample inputs, wherein said separation chamber is divided into a large number of separate separation spaces with respectively separate electrodes and separate fractionation outlets, **characterized in that** said separation spaces have separate sample inputs.

4. The device according to claim 3, **characterized in that** common electrodes are provided for adjacent separation spaces.

5. The device according to claim 3 or 4, **characterized in that** said separate separation spaces have different numbers of fractionation sites.

6. The device according to any of the preceding claims, **characterized in that** two separate conveying channels of a metering pump are connected with the separation space in the area of the fractionation outlets close to the electrode in order to introduce medium and discharge it in the same volume.

7. The device according to any of the preceding claims, **characterized in that** said separation chamber is constructed of a front part and a rear part which, respectively, consists of several separate structural chamber elements.

8. The device according to claim 7, **characterized in that** said rear part consists of a solid metal block.

9. The device according to claim 8, **characterized in that** cooling pipes are provided in said metal block.

## Revendications

1. Procédé d'électrophorèse libre destiné à décomposer une substance d'échantillon en ses analytes, comprenant, dans une première étape, e fractionnement grossier de la substance d'échantillon et, dans au moins une deuxième étape, un fractionnement fin de la substance d'échantillon ayant subi un fractionnement grossier, **caractérisé en ce que**
(a) au cours de la première étape on utilise un nombre de points de frac ionnement inférieur à celui de la deuxième étape.

2. Procédé selon la revendication 1, **caractérisé en ce que** le travail s'effectue, lors de la première étape, à un débit linéaire élevé et sur un parcours de migration court des analytes à décomposer.

3. Dispositif d'électrophorèse destiné à la mise en oeuvre du procéde selon la revendication 1 ou 2 comprenant une chambre de décomposition, des électrodes, des fractionnements et des injections d'échantillon, la chambre de décomposition étant divisée en une pluralité de compartiments de décomposition séparés, équipés chacun d'électrodes séparée s et de sorties pour parties fractionnées, **caractérisé en ce que** les compartiments de décomposition présentent des injections d'échantillons séparée s.

4. Dispositif selon la revendication 3, **caractérisé en ce que** des électrodes communes sont prévues pour des compartiments de décomposition voisins.

5. Dispositif selon la revendication 3 ou 4, **caractérisé en ce que** les compartiments de décomposition séparés présentent des nombres de points le fractionnement différents.

6. Dispositif selon l'une des revendications précédentes, **caractérisé en ce que** deux canaux d'acheminement séparés d'une pompe de dosage sont reliés au compartiment de fractionnement dans la zone des sorties pour parties fractionnées proches des électrodes, afin d'ajouter du milieu et de l'évacuer dans le même volume.

7. Dispositif selon l'une des revendications précédentes, **caractérisé en ce que** la chambre de décomposition est constituée d'une partie avant et d'une partie arrière, constituée chacune de plusieurs composants de chambre séparés.

8. Dispositif selon la revendication 7, **caractérisé en ce que** la partie arrière est constituée d'un bloc métallique massif.

9. Dispositif selon la revendication 8, **caractérisé en ce que** des tuyaux de refroidissement sont prévus dans le bloc métallique.
